# EUROPÄISCHE PATENTSCHRIFT

(11) **EP 3 585 671 B1**
(45) Veröffentlichungstag und Bekanntmachung des Hinweises auf die Patenterteilung: **12.01.2022**
(21) Anmeldenummer: 18708943.8
(22) Anmeldetag: 23.02.2018
(51) Int. Cl.: B62D 1/16, F16C 33/20

(54) **LAGER FÜR EINE LENKSPINDEL UND LENKSÄULE FÜR EIN KRAFTFAHRZEUG**
BEARING FOR A STEERING SHAFT AND STEERING SYSTEM FOR A VEHICULE
PALIER POUR UNE COLONNE DE DIRECTION ET SYSTEME DE DIRECTION POUR UN VEHICULE

(30) Priorität: 27.02.2017 DE 102017203101; 26.04.2017 DE 102017207012
(43) Veröffentlichungstag der Anmeldung: 01.01.2020
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT)
(74) Vertreter: thyssenkrupp Intellectual Property GmbH
(86) Internationale Anmeldenummer: PCT/EP2018/054576
(87) Internationale Veröffentlichungsnummer: WO 2018/154073

(56) Entgegenhaltungen:
- EP-A1- 0 805 090
- DE-A1-102006 019 576
- FR-A5- 2 031 653
- GB-A- 2 345 520

## Beschreibung

### Stand der Technik

Die Erfindung betrifft ein Lager für eine Lenkspindel einer Lenksäule für ein Kraftfahrzeug, das eine in Achsrichtung durchgehende Lageröffnung, in der die der Lenkspindel um die Längsachse drehbar aufnehmbar ist, und ein Befestigungsmittel zur Verbindung mit einer Manteleinheit der Lenksäule aufweist. Eine Lenksäule für ein Kraftfahrzeug, mit einer Manteleinheit, in der eine Lenkspindel in einem derartigen Lager um die Längsachse drehbar gelagert ist, ist ebenfalls Gegenstand der Erfindung, wobei das Befestigungsmittel zumindest ein Formschlusselement aufweist, welches quer zur Achsrichtung bewegbar ausgestaltet ist und ein federndes Rastelement aufweist, das mit einer korrespondierenden, starren Formschlussaufnahme der Manteleinheit formschlüssig in Eingriff bringbar ist, um eine formschlüssige Verbindung des Lagers mit der Manteleinheit zu erzeugen, welche das Lager in Achsrichtung formschlüssig an der Manteleinheit festlegt.

Lenksäulen für Kraftfahrzeuge weisen eine Lenkspindel auf, welche einen Teil der Lenkwelle bildet, an deren bezüglich der Fahrtrichtung hinterem Ende das Lenkrad angebracht ist und die in einer Manteleinheit, auch als Führungskasten bezeichnet, drehbar gelagert und an der Fahrzeugkarosserie gehaltert ist. Zur Einstellung der Lenkradposition ist es weiterhin bekannt, die Lenkspindel in Längsrichtung dadurch verstellbar zu gestalten, dass sie aus zwei in Richtung ihrer Längsachse teleskopierbaren, drehmomentschlüssig miteinander verbundenen Wellenteilen gebildet wird, beispielsweise durch axial ineinander gesteckte Profilwellen. Das relativ zur Manteleinheit teleskopierbar in Längsrichtung verstellbare Wellenteil ist in einem inneren Mantelrohr drehbar gelagert, welches seinerseits in der besagten Manteleinheit in Achsrichtung teleskopierbar aufgenommen ist. Mit dem anderen Wellenteil, welches in Richtung der Achse relativ zur Manteleinheit fest positioniert ist, ist die Lenkspindel in dieser Manteleinheit drehbar gelagert und abgestützt.

Um eine leichtgängige Drehung der Lenkspindel zur Übertragung des eingebrachten Lenkmoments und eine radiale Abstützung in jeder Verstellposition zu gewährleisten, ist die Lenkspindel in mindestens einem Lager in der Manteleinheit gelagert, üblicherweise über ihre Länge in weiteren Lagern mehrfach gelagert. Dabei ist es im Stand der Technik bekannt, beispielsweise aus der DE 10 2012 105 151 B3, zumindest ein Lager im bezüglich der Fahrtrichtung vorderen Bereich der Manteleinheit anzuordnen. Das bekannte Lager ist im Wesentlichen ringförmig ausgestaltet mit einer zentral in Achsrichtung durchgehenden Lageröffnung, in der die Lenkspindel gleitend gelagert ist. Zur Befestigung an der Lenksäule ist dieses Lager von vorn in den offenen Querschnitt der rohrförmigen Manteleinheit eingepresst, wobei seine äußere Umfangsfläche ein reibschlüssiges Befestigungsmittel zur Verbindung mit der Manteleinheit aufweist.

Das bekannte Lager ermöglicht eine definierte Lagerung der Lenkspindel, die Befestigung durch Einpressen in die Manteleinheit erfordert jedoch eine maßgenaue und entsprechend aufwendige Bearbeitung der Fügeflächen sowie eine präzise Ausrichtung beim Einpressen, wodurch die Montage in der Lenksäule aufwendig ist.

Aus der EP 0 805 090 A1 ist eine Lenksäule der eingangs genannten Art mit einem Lager bekannt, welches an einer Lenkspindel fixiert ist.

Ein Lager mit den eingangs genannten Merkmalen ist in der FR 2 031 653 A5 beschrieben. Angesichts der vorangehend erläuterten Problematik ist es eine Aufgabe der vorliegenden Erfindung, ein verbessertes Lager zur Verfügung zu stellen, welches einfacher herstellbar und montierbar ist.

### Darstellung der Erfindung

Diese Aufgabe wird gelöst durch ein Lager gemäß Anspruch 1 und eine Lenksäule gemäß Anspruch 7 mit einem derartigen Lager. Vorteilhafte Weiterbildungen ergeben sich aus den Unteransprüchen.

Erfindungsgemäß wird für ein Lager der eingangs genannten Art vorgeschlagen, dass sich das Rastelement als biegeelastische Rastzunge in Achsrichtung von einer Stirnseite des Lagers erstreckt.

Das erfindungsgemäße Lager weist mindestens ein, bevorzugt mehrere Formschlusselemente auf, welche nicht starr mit dem Lager ausgebildet sind, wie die im Stand der Technik fest auf dem Außenumfang des Lagers angeordneten Fügeflächen, sondern die relativ zur Längsachse bewegbar und dadurch derart positionierbar sind, dass sie jeweils mit einer korrespondierenden, starren Formschlussaufnahme der Manteleinheit formschlüssig in Eingriff bringbar sind.

Erfindungsgemäß ist vorgesehen, dass sich das Rastelement als biegeelastische Rastzunge in Achsrichtung von einer axialen Stirnseite des Lagers erstreckt. Das federnde Rastelement ist elastisch an dem Lager angebracht, so dass es sich im entspannten Normalzustand in Fixierposition befindet. Zur Montage wird das Rastelement gegen seine Federwirkung in die Montagestellung bewegt, beispielsweise wird eine biegeelastische Rastzunge so weit nach innen auf die Längsachse zu gebogen, dass das Lager in den Öffnungsquerschnitt der Manteleinheit in Achsrichtung eingesteckt werden kann, wobei das Rastelement an der Innenseite der Montageöffnung in Achsrichtung entlanggleiten kann. Wird die korrespondierende Formschlussöffnung erreicht, entspannt sich das Rastelement, beispielsweise richtet sich besagte Rastzunge bezüglich der Längsachse nach außen auf, und schnappt nach außen in die Formschlussaufnahme in der Innenseite der Manteleinheit ein. Das Einrasten des Rastelements in die Rastaufnahme bewirkt eine formschlüssige Verriegelung und Fixierung des Lagers in der Manteleinheit, so dass das Lager axial fixiert ist und bezüglich der Achsrichtung formschlüssig gehalten ist.

Das federnde Rastelement kann dadurch realisiert werden, dass ein Federelement zwischen dem Lager und dem Rastelement eingesetzt ist, welches eine Federkraft bezüglich der Längsachse radial nach außen ausübt. Es ist ebenfalls denkbar und möglich, dass das Rastelement in sich federnd ausgebildet ist, beispielsweise in Form der genannten Rastzunge. Eine derartige Rastzunge kann langgestreckt, im Wesentlichen stegförmig ausgebildet sein und in Achsrichtung von der Stirnseite des Lagers, die der Manteleinheit zugewandt ist, bis außerhalb des axialen Lagerbereichs der Lageröffnung vorstehen. An ihrem in Achsrichtung vom Lager frei vorstehenden Endbereich kann die Rastzunge eine Haken- oder Widerhakenform haben, die in die Formschlussaufnahme einrasten kann.

Dadurch, dass ein oder mehrere federnde Rastelemente vorgesehen sind, wird die Montage vereinfacht, da die Rastelemente beim Einsetzen des Lagers in die Öffnung der Manteleinheit selbsttätig in die Montagestellung einfedern, und eine leichte Positionierung des Lagers in Achsrichtung ermöglichen. In Betriebsposition bewegen sich die Rastelemente selbsttätig durch die Federkraft in Fixierstellung, in der sie nach außen in die jeweils zugehörige Rastvertiefung in der Manteleinheit einrasten, und sorgen für die formschlüssige, positionsgenaue axiale Fixierung des Lagers in der Manteleinheit.

Die Montage des Lagers wird dadurch vereinfacht, dass das oder die Formschlusselemente zunächst in eine Montagestellung gebracht werden, in der sie quer zur Längsachse verlagert sind, so dass keine Verbindung mit der Manteleinheit erfolgen kann und folglich das Lager relativ zur Manteleinheit in Achsrichtung frei positioniert werden kann, bis die definierte Betriebsposition des Lagers erreicht ist. Dann werden die Formschlusselemente in eine Fixierstellung gebracht, in der sie mit korrespondierenden, starren Formschlussaufnahmen wie beispielsweise Vertiefungen oder Hinterschnitten der Manteleinheit verbunden werden. Dadurch wird eine formschlüssige Verbindung des Lagers mit der Manteleinheit erzeugt, welche das Lager in Achsrichtung formschlüssig an der Manteleinheit festlegt.

Bevorzugt sind das oder die Formschlusselemente in radialer Richtung, bezüglich der Lageröffnung von außen nach innen bewegbar. In Montagestellung können die Formschlusselemente nach innen verlagert werden, so dass das Lager in Achsrichtung mit den Formschlusselementen koaxial zur Lageröffnung in den Öffnungsquerschnitt der Manteleinheit eingesetzt werden kann, bis in der Manteleinheit ausgebildete, korrespondierende Formschlussaufnahmen, beispielsweise in der Innenseite angeordnete Vertiefungen, erreicht werden. Dort werden die Formschlusselemente radial nach außen in ihre Fixierposition bewegt, in der sie formschlüssig in besagte Formschlussaufnahmen eingreifen und für eine formschlüssige Fixierung des Lagers sorgen.

Eine vorteilhafte Ausführung der Erfindung sieht vor, dass das Befestigungsmittel einen Haltekragen mit einer in Achsrichtung offenen Aufnahmevertiefung aufweist. Der Haltekragen verläuft zumindest abschnittweise um die Längsachse und wird so bemessen, dass er über den Außenquerschnitt der rohrförmigen Manteleinheit, an der das Lager angebracht werden soll, vorsteht. Auf seiner der Manteleinheit zugewandten Stirnseite weist der Haltekragen eine Aufnahmevertiefung auf, bevorzugt in Form einer in Achsrichtung offenen, zumindest abschnittweise umlaufenden Nut oder einem axialen Absatz. In Umfangsrichtung folgt der Verlauf der Nut oder der Absatz - zumindest abschnittweise - dem Wandungsquerschnitt der Wandung der Manteleinheit an deren vorderen, offenen Ende. Die Breite der Nut wird zumindest so bemessen, dass das vordere offene Ende der rohrförmigen Manteleinheit darin in Achsrichtung aufnehmbar ist. Dadurch kann das Lager axial auf das vordere Rohrende der Manteleinheit aufgesteckt werden, wobei der Haltekragen die Manteleinheit von außen über- bzw. umgreift.

Zur Montage wird der Haltekragen in Achsrichtung auf die Manteleinheit aufgesteckt, bis diese mit ihrem vorderen Ende in der Aufnahmevertiefung anschlägt, d.h. stirnseitig am Grund der Nut oder an dem Absatz. Dann ist die Fixierstellung erreicht, in der wie vorangehend beschrieben das oder die erfindungsgemäßen Formschlusselemente, beispielsweise die Rastzungen, in formschlüssigen Eingriff mit den zugeordneten Formschlussaufnahmen kommen. Dadurch, dass der Haltekragen die Manteleinheit von außen umgreift, kann bei der Montage einfach kontrolliert werden, ob das Lager tatsächlich die Fixierstellung erreicht hat, wodurch die Fertigung vereinfacht wird.

Eine Ausführung der Erfindung sieht vor, dass die Lageröffnung in einem Lagerring ausgebildet ist, der in einem Außenring gehalten ist, der zumindest ein Befestigungsmittel aufweist. Bei dieser Bauform dient der Außenring zur Befestigung des Lagers an der Manteleinheit, und kann zu diesem Zweck ein oder mehrere Formschlusselemente aufweisen, beispielsweise federnde Rastzungen, und zusätzlich oder alternativ einen Haltekragen mit einer in Achsrichtung offenen Aufnahmevertiefung. Der Außenring kann bezüglich Form und Abmessungen an die Manteleinheit angepasst sein, so dass eine einfache und dabei sichere Montage durch axiales Aufstecken auf das vordere Ende unter Nutzung der erfindungsgemäßen Vorteile ermöglicht wird. Weiterhin dient der Außenring als Träger und Halterung für den Lagerring, der als bevorzugt koaxial in dem Außenring angeordneter Innenring ausgebildet ist. Der Außen- und Lagerring weisen miteinander korrespondierende Verbindungsmittel auf, so dass in verbundenem Zustand eine Lagereinheit gebildet wird. Ein weiterer Vorteil dieser zweiteiligen Ausführung ist, dass der Außenring und der Lagerring unabhängig voneinander an unterschiedliche Anforderungen angepasst werden können. Dadurch wird die Flexibilität der Anwendung erhöht.

Bei der vorgenannten Ausführung ist es vorteilhaft, dass der Lagerring quer zur Achsrichtung beweglich, bevorzugt elastisch in dem Außenring gehaltert ist. Die bewegliche Halterung ermöglicht eine Verlagerung des Lagerrings und damit der darin ausgebildeten Lageröffnung relativ zum Außenring zumindest quer zur Längsachse. Dadurch kann eine Deachsierung der in dem Lagerring gelagerten Lenkspindel relativ zum fest in der Manteleinheit angebrachten Außenring ausgeglichen werden, die sich beispielsweise durch die Überbestimmung bei einer dreifachen Lagerung in einer teleskopierend längenverstellbaren Lenksäule ergeben kann. Eine elastische Halterung hat den besonderen Vorteil, dass eine selbsttätige Rückstellung erfolgt und eine hohe Eigenfrequenz und Steifigkeit der Lenksäule gewährleistet ist.

Bevorzugt kann das erfindungsgemäße Lager zumindest teilweise als Kunststoff-Spritzgussteil ausgebildet sein. Je nach Bauform kann der Außenring und/oder Lagerring aus Kunststoff gespritzt sein. An der Fertigung im Kunststoff-Spritzguss ist vorteilhaft, dass komplexe Formen problemlos realisiert werden können, so dass die erfindungsgemäße Formschlusselemente einstückig mit dem Kunststoff-Spritzgussteil ausgebildet sein können, beispielsweise als Federzungen am Außenring. Ein Haltekragen einschließlich Aufnahmevertiefung kann ebenfalls einstückig an dem Kunststoffteil realisiert werden.

Eine Weiterbildung der vorgenannten Ausführung sieht vor, dass zumindest ein Teil des Lagers im Zweikomponenten-Kunststoff-Spritzguss, kurz 2K-Spritzguss, gefertigt ist. Dabei werden Kunststoffe mit unterschiedlichen Eigenschaften aufeinander folgend in die Spritzgussform eingespritzt, so dass funktionale Bereiche aus unterschiedlichen Kunststoffen stoffschlüssig miteinander verbunden sind. Beispielsweise kann der Lagerring aus einem widerstandsfähigen Kunststoff mit guten Lagereigenschaften gefertigt sein, der zumindest bereichsweise mit einem weicheren, thermoplastischem Elastomer-Kunststoff umspritzt wird. Aus dem Elastomer können elastische Halteelemente gebildet sein, die wie vorangehend beschrieben zur elastisch nachgiebigen Halterung des Lagerrings in einem Außenring dienen. Im 2K-Spritzguss können derartige elastische Halteelemente rationell und unverlierbar an dem Lagerring ausgebildet werden, so dass die Montage vereinfacht wird.

Der Querschnitt des Lagers kann im Bereich des Befestigungsmittels bezüglich der Längsachse unrund sein. Die Manteleinheit kann im Bereich des Lagers als Rohr oder Rohrprofil mit unrundem Querschnitt ausgebildet sein, beispielsweise als Vier-, Fünf-, Sechs- oder Achtkantrohr, mit gleichen oder auch ungleichen Kantenlängen. Das Lager wird im Bereich der Befestigungsmittel an die Querschnittsform angepasst, indem es mit dem Querschnitt der Manteleinheit korrespondierend eckig ausgestaltet wird. Beispielsweise kann ein Außenring einen unrunden, mehreckigen Außenumfang haben, mit dem er bezüglich Drehung um die Längsachse formschlüssig in den Öffnungsquerschnitt der Manteleinheit axial einsteckbar ist. Die erfindungsgemäßen Befestigungsmittel werden ebenfalls an den unrunden Querschnitt angepasst, beispielsweise kann die Aufnahmevertiefung in dem Haltekragen entsprechen dem unrunden Umfang der Manteleinheit folgend geformt sein.

Es ist möglich, dass das Lager als Gleitlager oder alternativ als Wälzlager ausgebildet ist. Bei der Ausführung als Gleitlager ist die Lenkspindel gleitend in Lageröffnung aufgenommen, beispielsweise in einem aus Kunststoff mit guten Gleiteigenschaften gefertigten Lagerring. Bei der Ausführung als Wälzlager sind zwischen Lenkspindel und Lageröffnung Wälzkörper angeordnet.

Bei einer Lenksäule für ein Kraftfahrzeug, mit einer Manteleinheit, in der eine Lenkspindel in einem Lager um die Längsachse drehbar gelagert ist, wird erfindungsgemäß vorgesehen, dass das Lager gemäß einer der vorangehend beschriebenen Ausführungsformen ausgestaltet ist.

Das Formschlusselement bildet ein Befestigungsmittel des Lagers in der Manteleinheit, wie dies vorangehend für die erfindungsgemäßen Ausgestaltungen des Lagers beschrieben ist. Im Einzelnen können sämtliche oben beschriebenen Merkmale und Merkmalskombinationen des Lagers bei einer erfindungsgemäßen Lenksäule realisiert sein. Durch die vereinfachte Montage des Lagers wird entsprechend die Fertigung der Lenksäule vereinfacht.

Eine Ausführung der Lenksäule kann vorsehen, dass die Manteleinheit zumindest ein Positionierelement aufweist, welches kraftschlüssig mit dem Lager verbindbar ist. Das Positionierelement kann mindestens ein Vorspann- oder Führungselement umfassen, welches radial nach innen in den das Lager aufnehmenden Öffnungsquerschnitt der rohrförmigen Manteleinheit vorsteht, und bevorzugt elastisch federnd von außen an dem Lager anliegt zur Führung und Abstützung beim axialen Einsetzen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule aus Figur 1 in einer auseinander gezogenen Teilansicht,
- Figur 3: eine Detailansicht auf das vordere Ende der Lenksäule gemäß Figur 1,
- Figur 4: die Lenksäule gemäß Figur 1 in einer schematischen, teilweise auseinander gezogenen perspektivischen Ansicht,
- Figur 5: ein erfindungsgemäßes Lager in einer schematischen perspektivischen Ansicht,
- Figur 6: das Lager gemäß Figur 5 in einer auseinander gezogenen Ansicht,
- Figur 7: Querschnitt durch das in der Lenksäule gemäß Figur 1 verbaute erfindungsgemäße Lager,
- Figur 8: ein Längsschnitt durch das vordere Ende der Lenksäule gemäß Figur 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

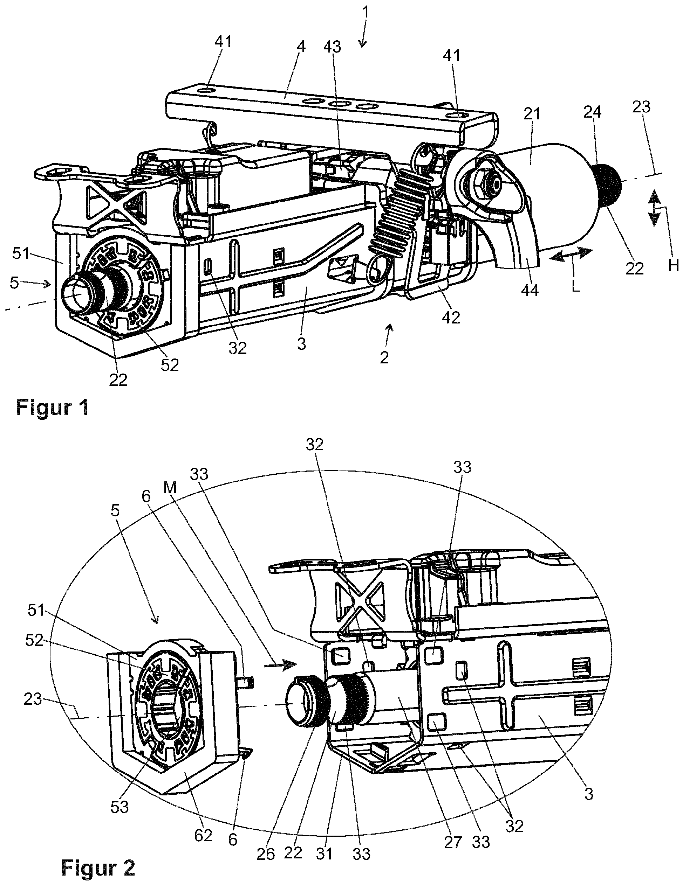

Figur 1 zeigt eine Lenksäule 1, mit einer Stelleinheit 2, die ein inneres Mantelrohr 21 aufweist, in der eine Lenkspindel 22 um eine Längsachse 23 drehbar gelagert ist. An dem bezüglich der Fahrtrichtung hinteren, dem Fahrer zugewandten Ende weist die Lenkspindel 22 einen Befestigungsabschnitt 24 zur Anbringung eines nicht dargestellten Lenkrads auf. In ihrem vorderen Bereich ist die Stelleinheit 2 mit dem Mantelrohr 21 in einer Manteleinheit 3 aufgenommen, die auch als Führungskasten bezeichnet wird. Am vorderen Ende der Lenkspindel 22 - in Figur 1 nach links unten zeigen - welches nach vorne aus der Manteleinheit 3 vorsteht, sind Kopplungsmittel 26 ausgebildet zur Verbindung mit einer nicht dargestellten Zwischenwelle der Lenkung.

Zur Anbringung an einer nicht dargestellten Fahrzeugkarosserie weist die Lenksäule 1 eine Trageinheit 4 mit Mittel 41 zur Befestigung in Form von Bohrungen auf.

Von der Trageinheit 4 stehen zwei sich beiderseits quer zur Längsachse 23 gegenüberliegende Seitenwangen 42 nach unten vor, zwischen denen die Manteleinheit 3 gehaltert ist. Durch die Seitenwangen 42 geht ein Spannbolzen 43 einer Spanneinrichtung hindurch, die durch manuelle Betätigung eines mit dem Spannbolzen 43 drehfest verbundenen Spannhebels 44 wahlweise in Feststell- oder Löseposition gebracht werden kann. In Feststellposition werden die Seitenwangen 42 gegeneinander zusammengedrückt, wodurch die Manteleinheit 3 zwischen den Seitenwangen 42 reibschlüssig eingeklemmt und fixiert wird, und durch die auf die Manteleinheit 3 wirkende Klemmkraft die Stelleinheit 2 in der Manteleinheit 3 festgeklemmt und fixiert wird. In Löseposition ist die Klemmung durch Aufhebung der Klemmkraft zwischen den Seitenwangen 42 gelöst, und die Manteleinheit 3 kann zur Höhenverstellung relativ zur Trageinheit 4 zwischen den Seitenwangen 42 in Höhenrichtung H auf oder ab bewegt werden, wie mit dem Doppelpfeil angedeutet. Zur Längsverstellung kann das Mantelrohr 21 der Stelleinheit 2 in Längsrichtung L, welches der Achsrichtung der Längsachse 23 entspricht, in der Manteleinheit 3 teleskopierend vor oder zurück bewegt werden, wie mit dem Doppelpfeil angedeutet. Die Achsrichtung bzw. die Längsrichtung L ist gleichbedeutend mit in Richtung der Längsachse 23.

Die Lenkspindel 22 ist in der Regel im Bereich des hinteren Endes des Mantelrohrs 21, und an dessen vorderem Ende, welches in der Manteleinheit 3 aufgenommen ist, mittels Wälzlagern gelagert, die hier nicht dargestellt sind. In dem vorderen Endbereich der Manteleinheit 3 ist ein erfindungsgemäß ausgestaltetes Lager 5 angebracht, welches die Lenkspindel 22 in ihrem vorderen Endbereich drehbar lagert.

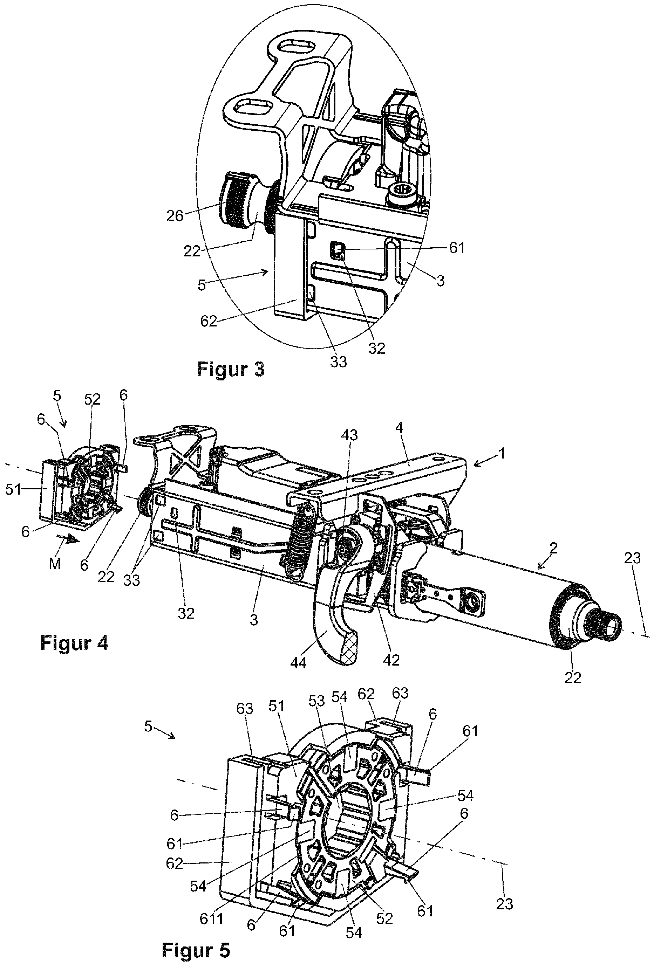

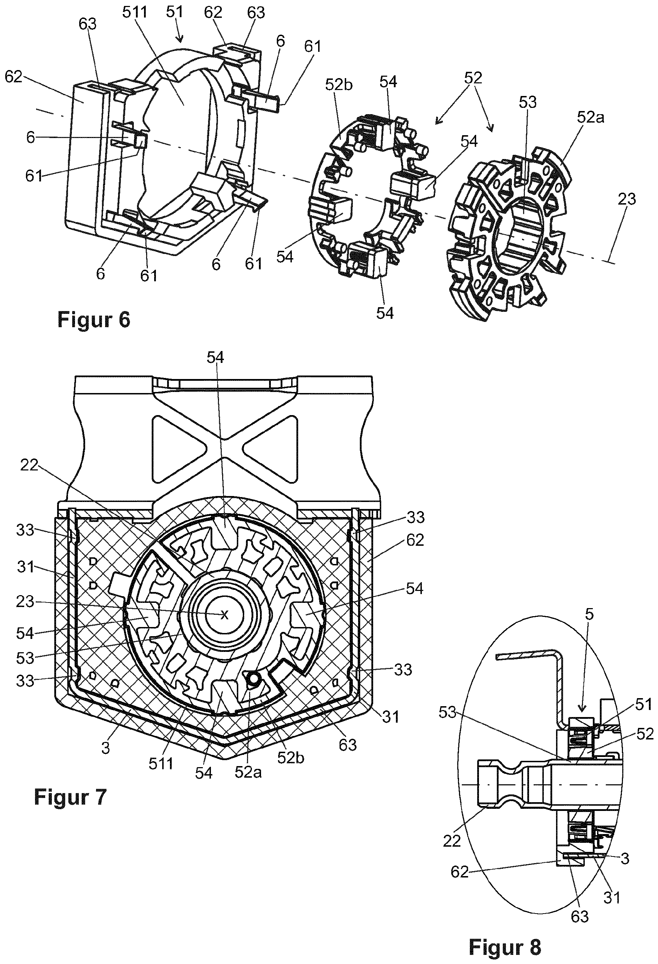

Das Lager 5 - welches in den Figuren 5 und 6 separat dargestellt ist - weist einen Außenring 51 auf, in dem ein Lagerring 52 gehaltert ist, der als koaxialer Innenring ausgebildet und bezüglich Drehung um die Längsachse 23 in dem Außenring 51 gesichert ist.

Figur 2 zeigt eine Detaildarstellung der Lenksäule 1 vor der Montage des Lagers 5, welches in Achsrichtung koaxial zur Längsachse 23 ausgerichtet vor der Manteleinheit 3 positioniert ist. Zur Montage wird das Lager 5, wie mit dem zur Längsachse 23 parallelen Pfeil angedeutet in Montagerichtung M, auf das vordere Ende der Manteleinheit 3 aufgesteckt, wie im Folgenden noch erläutert wird.

Figur 3 zeigt ebenfalls die Lenksäule 1 in dem in Figur 2 dargestellten Zustand vor der Montage des Lagers 5, in einer perspektivischen Ansicht von hinten.

Das Lager 5 ist im Detail in Figuren 5 und 6 separat, und in Figuren 7 und 8 in montiertem Zustand dargestellt.

Der als Innenring ausgebildete Lagerring 52 weist eine axial durchgehende Lageröffnung 53 auf, die in montiertem Zustand koaxial zur Längsachse 23 ausgerichtet ist. Im gezeigten Beispiel wird die Lenkspindel 22 mit einem Lagerabschnitt 27, der in Figur 2 erkennbar ist, in der Lageröffnung 53 gleitend drehbar aufgenommen, so dass eine Gleitlageranordnung gebildet wird.

Der Lagerring 52 ist als Kunststoff-Spritzgussteil ausgebildet, und zwar im Zweikomponenten-(2K-)Spritzguss aus zwei unterschiedlichen thermoplastischem Polymeren. Im Einzelnen wird zunächst ein Lagerelement 52a, welches die Lageröffnung 53 aufweist, aus einem ersten Kunststoff gespritzt, der für die gleitende Lagerung des Lagerabschnitts 27 der Lenkspindel 22 passende Festigkeits-, Gleit- und Verschleißeigenschaften aufweist. Das Lagerelement 52a wird mit einer dieses außen bezüglich der Längsachse 23 umgebenden Umspritzung 52b aus einem zweiten thermoplastischen Kunststoff umspritzt, vorzugsweise einem thermoplastischen Elastomer, welches weicher und elastischer ist als der erste Kunststoff. In Figur 5 ist die reale Anordnung der durch das 2K-Spritzgießen mit dem Lagerelement 52a unlösbar stoffschlüssig verbundenen Umspritzung 52b gezeigt, während Figur 6 diese nur zur Verdeutlichung schematisch in Längsrichtung separat auseinander gezogen zeigt.

In der Umspritzung 52b sind Halteelemente 54 ausgebildet, welche durch das verwendete Elastomer gummielastisch verformbar sind. Im gezeigten Beispiel sind vier Halteelemente 54 gleichmäßig über den Umfang verteilt angeordnet, wobei sie bezüglich der Längsachse 23 von dem Lagerring 52 radial nach außen vorstehen, wie aus Figur 5 und Figur 7 entnehmbar ist.

Der Lagerring 52 ist koaxial in einer Halteöffnung 511 in dem Außenring 51 aufgenommen und gehalten. Dabei liegt er nur mit den radial vorstehenden elastischen Halteelementen 54, die aus dem Elastomer bestehen, von innen in der Halteöffnung 511 an. Auf diese Weise wird eine bewegliche, elastische Halterung realisiert, die eine Verlagerung des Lagerrings 52 innerhalb des Außenrings 51 quer zur Längachse 23 zulässt, so dass eine Deachsierung der Lenkspindel 22 ausgeglichen werden kann.

Der Außenring 51 ist ausgebildet zur Befestigung an dem vorderen Endbereich der Manteleinheit 3. Als erfindungsgemäße Befestigungsmittel sind Formschlusselemente vorgesehen, die als federnde Rastzungen 6 ausgebildet sind. Diese Rastzungen 6 erstrecken in Form von stegartigen Vorsprüngen in Montagerichtung M parallel zur Längsachse 23 und somit in Achsrichtung von der axialen Stirnseite des Lagers 5, welche der Manteleinheit 3 gegenüber liegt. An ihrem vorstehenden freien Endbereich weisen die Rastzungen 6 radial nach außen vorstehende Rastvorsprünge 61 auf. Die Rastvorsprünge 61 sind am freien Ende widerhakenartig angeschrägt, so dass die Haltewirkung der Widerhaken gegen die Montagerichtung M gerichtet ist.

Der Außenring 51 ist als Kunststoff-Spritzgussteil gefertigt, an dem die Rastzungen 6 einstückig integriert ausgebildet sind.

Der Außenring 51 weist als weiteres Befestigungsmittel einen Haltekragen 62 auf, der auf der gegen die Manteleinheit 3 gerichteten Stirnseite eine axial offene Nut 63 aufweist, die eine abschnittweise um die Längsachse 23 umlaufende Aufnahmevertiefung bildet. Der unrunde, hier eckige Verlauf und die Breite der Nut 63 sind entsprechend dem Querschnitt der Mantelwandung 31 an deren freien Stirnseite angepasst. Dadurch kann die Mantelwandung 31, die im gezeigten Beispiel einen fünfeckigen Querschnitt der Manteleinheit 3 begrenzt, in axialer Richtung in der Nut 63 aufgenommen werden, wie dies in Figur 7 erkennbar ist.

Der Haltekragen 62 ist wie die Rastzungen 6 einstückig mit dem Außenring 51 als Kunststoff-Spritzgussteil gefertigt. Somit bilden die Rastzungen 6, der Haltekragen 62 und der Außenring 51 ein einstückiges integrales Bauteil.

Zur Montage wird das Lager 5 wie in Figur 5 bereitgestellt, wobei der Lagerring 52 in der Halteöffnung 611 in dem Außenring 51 gehalten ist. Mit der Lageröffnung 53 wird das Lager 5 vor dem Öffnungsquerschnitt der Manteleinheit 3 koaxial zur Längsachse 23 positioniert, wobei die Nut 63 axial deckungsgleich mit der Mantelwandung 31 ausgerichtet wird, wie in Figur 2 und Figur 4 dargestellt. Anschließend wird das Lager 5 in Montagerichtung M parallel zur Längsachse 23 auf die Manteleinheit 3 aufgesteckt, wobei die freie stirnseitige Kante der Mantelwandung 31 axial in die Nut 63 eintaucht. Die widerhakenartigen Rastvorsprünge 61 kommen beim Einstecken in Kontakt mit der Innenseite der Manteleinheit 3, wodurch die Rastzungen 6 radial nach innen gegen die Längsachse 23 elastisch umgebogen werden, was ihrer Montagestellung entspricht. Beim weiteren Einstecken gleiten sie in dieser federnd vorgespannten Montagestellung auf der Innenseite der Manteleinheit 3 entlang, bis sie in der Manteleinheit 3 ausgebildete Rastöffnungen 32 erreichen, die in Form und Abmessungen zur formschlüssigen Aufnahme der Rastvorsprünge 61 angepasst sind. Sobald die Rastvorsprünge 61 beim Einstecken mit den Rastöffnungen 32 zur Deckung kommen, schnappen sie durch die Federwirkung der Rastzungen 6 radial nach außen formschlüssig in die Rastöffnungen 32 ein, wo sie sich in Fixierstellung befinden. Dadurch ist das Lager 5 in Achsrichtung formschlüssig in der Manteleinheit 3 fixiert, wie in dem in Figuren 1, 3, 7 und 8 dargestellten montierten Zustand.

Dadurch, dass die Mantelwandung 31 in der Nut 63 des Haltekragens 62 aufgenommen wird, schlägt sie bei der Montage am Grund der Nut 63 an, wodurch ein Endanschlag erzeugt wird, der eine Fehlpositionierung bei der Montage verhindert. Außerdem umgreift der Haltekragen 62 die Manteleinheit 3 von außen, so dass von außen leicht kontrollierbar ist, ob das Lager 5 korrekt in der Manteleinheit 3 sitzt.

Die Manteleinheit 3 kann Positionierelemente 33 aufweisen, die von der Innenseite radial nach innen vorstehen, so dass sie reibschlüssig an dem Lager 5 anliegen und dieses in der Manteleinheit 3 führen und abstützen.

Die Befestigungselemente in Form der Rastzungen 6 ermöglichen eine einfache und sichere Montage. Durch den Haltekragen 62 wird die einfache Montierbarkeit unterstützt, und eine einfache Positionskontrolle des Lagers 5 ermöglicht.

### Bezugszeichenliste

- 1: Lenksäule
- 2: Stelleinheit
- 21: Mantelrohr
- 22: Lenkspindel
- 23: Längsachse
- 24: Befestigungsabschnitt
- 26: Kopplungsmittel
- 27: Lagerabschnitt
- 3: Manteleinheit
- 31: Mantelwandung
- 32: Rastöffnungen
- 33: Positionierelement
- 4: Trageinheit
- 41: Mittel zur Befestigung
- 42: Seitenwange
- 43: Spannbolzen
- 44: Spannhebel
- 5: Lager
- 51: Außenring
- 511: Halteöffnung
- 52: Lagerring
- 52a: Lagerelement
- 52b: Umspritzung
- 53: Lageröffnung
- 54: Halteelement
- 6: Rastzungen
- 61: Rastvorsprünge
- 62: Haltekragen
- 63: Nut

## Patentansprüche

1. Lager (5) für eine Lenkspindel (22) einer Lenksäule (1) für ein Kraftfahrzeug, das eine in Achsrichtung durchgehende Lageröffnung (53), in der die der Lenkspindel (22) um die Längsachse (23) drehbar aufnehmbar ist, und mindestens ein Befestigungsmittel zur Verbindung mit einer Manteleinheit (3) der Lenksäule (1) aufweist,
wobei das Befestigungsmittel zumindest ein Formschlusselement (6) aufweist, welches quer zur Achsrichtung bewegbar ausgestaltet ist und ein federndes Rastelement aufweist, das mit einer korrespondierenden, starren Formschlussaufnahme der Manteleinheit (3) formschlüssig in Eingriff bringbar ist, um eine formschlüssige Verbindung des Lagers (5) mit der Manteleinheit (3) zu erzeugen, welche das Lager (5) in Achsrichtung formschlüssig an der Manteleinheit (3) festlegt,
**dadurch gekennzeichnet,**
**dass** sich das Rastelement als biegeelastische Rastzunge (6) in Achsrichtung von einer Stirnseite des Lagers (5) erstreckt.

2. Lager (5) nach Anspruch 1, **dadurch gekennzeichnet, dass** das Befestigungsmittel einen Haltekragen (62) mit einer in Achsrichtung offenen Aufnahmevertiefung (63) aufweist.

3. Lager (5) nach einem der vorangehenden Ansprüche, **dadurch gekennzeichnet, dass** die Lageröffnung (53) in einem Lagerring (52) ausgebildet ist, der in einem Außenring (51) gehalten ist, der zumindest ein Befestigungsmittel aufweist.

4. Lager (5) nach einem der vorangehenden Ansprüche, **dadurch gekennzeichnet, dass** es zumindest teilweise als Kunststoff-Spritzgussteil ausgebildet ist.

5. Lager (5) nach einem der vorangehenden Ansprüche, **dadurch gekennzeichnet, dass** im Bereich des Befestigungsmittels der Querschnitt bezüglich der Längsachse (23) unrund ist.

6. Lager (5) nach einem der vorangehenden Ansprüche, **dadurch gekennzeichnet, dass** es als Gleitlager oder als Wälzlager ausgebildet ist.

7. Lenksäule (1) für ein Kraftfahrzeug, mit einer Manteleinheit (3), in der eine Lenkspindel (22) in einem Lager (5) um die Längsachse (23) drehbar gelagert ist,
**dadurch gekennzeichnet,**
**dass** das Lager (5) nach einem der Ansprüche 1 bis 6 ausgebildet ist.

8. Lenksäule (1) nach Anspruch 7, **dadurch gekennzeichnet, dass** die Manteleinheit (3) zumindest ein Positionierelement aufweist, welches kraftschlüssig mit dem Lager (5) verbindbar ist.

## Claims

1. Bearing (5) for a steering spindle (22) of a steering column (1) for a motor vehicle, which bearing has a bearing opening (53) which is continuous in the axial direction and in which the steering spindle (22) can be accommodated rotatably about the longitudinal axis (23), and at least one fastening means for connection to a casing unit (3) of the steering column (1),
wherein the fastening means has at least one positively locking element (6) which is configured to be movable transversely with respect to the axial direction and has a resilient latching element which can be brought into engagement in a positively locking manner with a corresponding rigid positively locking receptacle of the casing unit (3) in order to produce a positively locking connection of the bearing (5) to the casing unit (3), which connection secures the bearing (5) in a positively locking manner in the axial direction to the casing unit (3),
**characterized**
**in that** the latching element extends as a flexurally elastic latching tongue (6) from an end side of the bearing (5) in the axial direction.

2. Bearing (5) according to Claim 1, **characterized in that** the fastening means has a holding collar (62) with a receiving depression (63) which is open in the axial direction.

3. Bearing (5) according to either of the preceding claims, **characterized in that** the bearing opening (53) is formed in a bearing ring (52) which is held in an outer ring (51) which has at least one fastening means.

4. Bearing (5) according to one of the preceding claims, **characterized in that** it is at least partially configured as a plastics injection moulded part.

5. Bearing (5) according to one of the preceding claims, **characterized in that**, in the region of the fastening means, the cross section is non-circular with respect to the longitudinal axis (23).

6. Bearing (5) according to one of the preceding claims, **characterized in that** it is configured as a plain bearing or as a rolling bearing.

7. Steering column (1) for a motor vehicle, with a casing unit (3) in which a steering spindle (22) is mounted in a bearing (5) so as to be rotatable about the longitudinal axis (23),
**characterized**
**in that** the bearing (5) is configured according to one of Claims 1 to 6.

8. Steering column (1) according to Claim 7, **characterized in that** the casing unit (3) has at least one positioning element which is connectable in a non-positively locking manner to the bearing (5) .

## Revendications

1. Palier (5) pour un arbre de direction (22) d'une colonne de direction (1) pour un véhicule automobile, qui comprend une ouverture de palier (53) traversante dans la direction axiale, dans laquelle l'arbre de direction (22) peut être reçu de manière rotative autour de l'axe longitudinal (23), et au moins un moyen de fixation pour la liaison avec une unité d'enveloppe (3) de la colonne de direction (1),
le moyen de fixation comprenant au moins un élément à complémentarité de forme (6), qui est conçu pour être mobile transversalement par rapport à la direction axiale, et un élément d'encliquetage à ressort, qui peut être mis en prise par complémentarité de forme avec un logement à complémentarité de forme rigide correspondant de l'unité d'enveloppe (3), afin de produire une liaison par complémentarité de forme du palier (5) avec l'unité d'enveloppe (3), qui fixe le palier (5) à l'unité d'enveloppe (3) par complémentarité de forme dans la direction axiale,
**caractérisé en ce que**
l'élément d'encliquetage s'étend sous la forme d'une languette d'encliquetage élastique en flexion (6) dans la direction axiale à partir d'un côté frontal du palier (5).

2. Palier (5) selon la revendication 1, **caractérisé en ce que** le moyen de fixation comprend un collet de retenue (62) muni d'un évidement de réception (63) ouvert dans la direction axiale.

3. Palier (5) selon l'une quelconque des revendications précédentes, **caractérisé en ce que** l'ouverture de palier (53) est formée dans un anneau de palier (52), qui est maintenu dans un anneau extérieur (51), qui comprend au moins un moyen de fixation.

4. Palier (5) selon l'une quelconque des revendications précédentes, **caractérisé en ce qu'**il est configuré au moins partiellement en tant que partie moulée par injection en matière plastique.

5. Palier (5) selon l'une quelconque des revendications précédentes, **caractérisé en ce que**, dans la zone du moyen de fixation, la section transversale par rapport à l'axe longitudinal (23) n'est pas circulaire.

6. Palier (5) selon l'une quelconque des revendications précédentes, **caractérisé en ce qu'**il est configuré en tant que palier lisse ou en tant que palier à roulement.

7. Colonne de direction (1) pour un véhicule automobile, munie d'une unité d'enveloppe (3), dans laquelle un arbre de direction (22) est monté de manière rotative autour de l'axe longitudinal (23) dans un palier (5),
**caractérisée en ce que**
le palier (5) est configuré selon l'une quelconque des revendications 1 à 6.

8. Colonne de direction (1) selon la revendication 7, **caractérisée en ce que** l'unité d'enveloppe (3) comprend au moins un élément de positionnement, qui peut être relié au palier (5) par complémentarité de force.
